# EUROPEAN PATENT APPLICATION

(11) **EP 1 223 526 A1**
(43) Date of publication of application: **17.07.2002**
(21) Application number: 01410001.0
(22) Date of filing: 10.01.2001
(51) Int. Cl.: G06F 17/60, H04L 12/58

(54) **Improved process and apparatus for email handling**

(71) Applicant: Hewlett-Packard Company, A Delaware Corporation, Palo Alto, CA 94304 (US)
(72) Inventor: Chalon, Denis, 38000 Grenoble (FR)
(74) Representative: Lloyd, Richard Graham

(57) **Abstract**

A method and apparatus for handling email is described. The method includes the step of re-transmitting a sent email to the originating sender where an intervening check of specified transmission criteria is included. In a preferred embodiment, the transmission criteria may include checking the email for content, any required attachments and the like. In response to such transmission criteria, the user can elect to send the email with or without amendment. In an alternative embodiment, the method checks for the presence of the sender in the cc: bcc: or to: list and depending on the inclusion of the sender, the system proceeds with sending the email or resubmits it for a checking step. The invention can be applied to a variety of system architectures including networks, client/server systems and the like.

## Description

### Technical Field

The present invention relates to an improved process and apparatus for composing, sending and otherwise handling electronic mail (email). More particularly, although not exclusively, the present invention relates to a method for preventing the unwanted or untimely transmission of email and for ensuring that email which is sent includes any desired attachments and incorporates the required content.

### Background Art

Electronic mail exhibits a substantial number of advantages when compared to paper mail or verbal communication. One of the most powerful of these is the speed with which email can be composed and sent. Using any commonly available email application, an electronic communication incorporating text, graphics, file attachments, *urls* (uniform record locators) and the like, can be quickly compiled and transmitted to one or more email recipients. This effectively instantaneous transmission can however have undesirable consequences in situations where an ill-considered, incomplete or incorrect email is sent.

Additionally, using most email applications, it is possible to simultaneously send email to a very large number of recipients. The strength of this functionality can also be a significant weakness as the consequences of a mistake can propagate to an extremely large number of email recipients in a very short time. For example, a sender may send an email to a group of meeting attendees advising them of an upcoming meeting, but forget to attach an agenda document to the email. The resulting confusion and subsequent exchange of emails defeats the immediacy and convenience of email as an effective tool for communication.

A number of solutions have been devised in an attempt to overcome this problem. One example is the "recall" function of Microsoft® Outlook®. This function allows a sender to retain some control over email after it is sent. However, it is only possible to replace or delete messages, which have been sent to a recipient who is not logged on, has not read the message or has not moved it out of their Inbox. As most people tend to read their incoming email regularly, this approach has only limited utility. Undesirably, the recall function can also draw attention to a sender's mistaken transmission of an email and subsequent attempts to recall it.

A slightly more sophisticated approach is described in Japanese Patent Abstract 05-191129, assigned to OKI Electric Co Ltd. However, this technique is analogous to a groupware document sharing system where documents produced by an author are managed in terms of access permission, revision history and latency in relation to the availability of a specified document to one or more users. The system described in this document is relatively complicated to implement and operate and requires that an author simultaneously manage sent, received and stored mail.

The present invention is directed to an email handling method and apparatus, which allows a user to retain a useful degree of control over his or her email communications, particularly in terms of reducing the risk of sending unwanted or incorrect email. The invention also aims to provide this functionality in a way which can be readily implemented and which operates without excessive user adaptation.

### Disclosure of the Invention

In one aspect the present invention provides for a method of operating an electronic mail (email) system including the steps of:
(a) enabling a sender to compose an email and initiate a send operation to one or more recipients in respect of the email;
(b) intercepting the email sent by the sender;
(c) presenting the email to the sender in such a way that the sender can amend the email; and
(d) in response to a specified triggering event dependent on satisfaction of the senders transmission criteria, transmitting the email to the one or more recipients.

According to the invention, senders can ensure that their outgoing email is accurate, incorporates any files which they may want to include as attachments and that the email is being sent to the correct recipient(s). The invention also allows the user to consider whether it is in fact desirable to send the email concerned. This latter issue may be particularly important given the developing body of law concerning defamation on the internet as well as legal privilege in relation to email. The invention may also be readily implemented in the context of an existing email system without substantial modification to the system architecture.

In a preferred embodiment, the triggering event may correspond to a user not aborting the transmission of the email within a specified delay period, whereupon at the end of the delay period, the email is automatically sent to the recipient(s) with no intervention.

In a further embodiment, the triggering event may correspond to the sender opening the email and taking no action, for example, to amend the email, and then closing the email, whereupon the email is immediately sent to the recipient(s) with no further intervention.

These alternative embodiments provide significant advantage in that they require little input from the sender other than relatively passive confirmation that the email should be sent in its original form.

In yet a further embodiment, the triggering event may correspond to the sender proactively confirming that the email should be sent, whereupon the email is immediately transmitted to the recipient(s) with no intervention.

The sender may specify the delay period or it may be globally set.

The transmission step may include additional intervening steps such as spooling the email or handling the email by mail-servers or any other operations as may be required by the particular email implementation or system architecture.

Alternatively, following step (c) above, the sender may amend the email and resend it in accordance with either step (b) above whereupon the email is again subjected to the transmission criteria, or step (d) above where the email is immediately transmitted to the recipient(s) with no further intervention.

In yet a further embodiment of the invention, if the sender is identified as a co-recipient of the email, the email is transmitted to the sender in accordance with step (c) above, otherwise the email is transmitted immediately to the one or more recipients.

### Brief Description of the Drawings

The present invention will now be described by way of example only and with reference to the drawings in which:
- Figure 1:: illustrates a flow diagram including an email monitoring/checking step;
- Figure 2:: illustrates an alternative embodiment of an email handling protocol which checks for the sender as a recipient; and
- Figures 3a and b:: illustrates simplified schematic diagrams of two embodiments of an email checking system architecture.

### Best Mode for Carrying Out the Invention

The following description will be given in the context of an email application running on a standalone computer. However, this is not to be construed as a limiting application. It will be clear to the skilled person that, with suitable modification, the invention may be adapted for use in a variety of email implementations and system architectures including networks, dialup connections and the like.

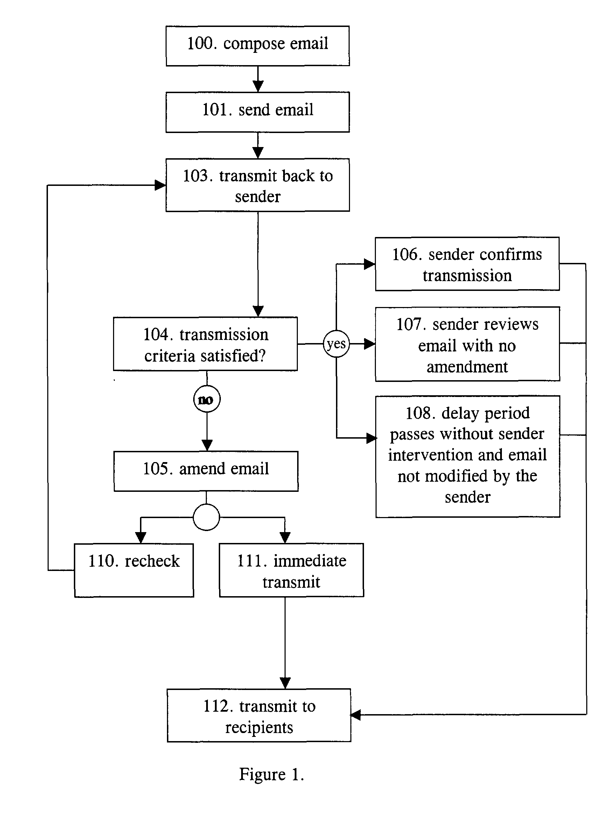

Referring to figure 1, an embodiment of the invention is shown. Initially a user composes (100) an email. The email may include text, graphics, attached files or any other form of electronic communication. A number of suitable formats, mail interfaces and file formats are well known in the art and will not be discussed in detail. Once the email is composed (100) and, where relevant, file(s) attached, the user initiates a send operation (101). In accordance with the described embodiment, once the email is sent (or more accurately 'submitted' to the email system of the present invention) the system automatically intercepts the email and presents it to the original sender (103). The sender then has the opportunity to review and amend the email.

If certain transmission criteria are satisfied, the sender initiates a triggering event that causes the email to be transmitted to the recipients.

Transmission criteria correspond to the specified basis upon which the decision to send the email is made. Examples of transmission criteria include simply checking the email for spelling and grammar or perhaps ensuring that an intended attachment is included with the outgoing email.

Triggering events may vary depending on the specific implementation of the email system. Examples of triggering events include a user proactively signaling to the email application that it is to proceed with sending the email to the recipients, the lapse of a specified time delay or possibly the act of the user opening and closing the pending email with or without amending it. Other triggering events may be possible depending on how the mail checking functionality is implemented. It is preferable however, that the user is presented with the outgoing email for checking in as non-invasive manner as possible. It should not overly interrupt the users habitual flow of email composition, checking and transmission.

In an alternative embodiment, the triggering event may take the form of the system initializing a time delay once the email is presented to and opened by the sender. If the sender reviews (opens) the email, checks that it satisfies the transmission criteria, and makes no amendments or does not abort the sending process (107, 108) the email is automatically transmitted to the recipients. If a time delay is implemented, and it lapses while the email is open, the email is not sent while the email is open.

When the email is intercepted and the user presented with the email (103), the transmission criteria may not be satisfied. The email may require amendment, perhaps by adding an omitted attachment or correcting spelling etc (105). Once this is done the email may be immediately transmitted to the recipient(s) (111) or transmitted back for presentation to the sender (110) for a further check. In most cases it is likely that only one iteration of the checking step will be needed. However, the possibility of multiple revisions should not be excluded.

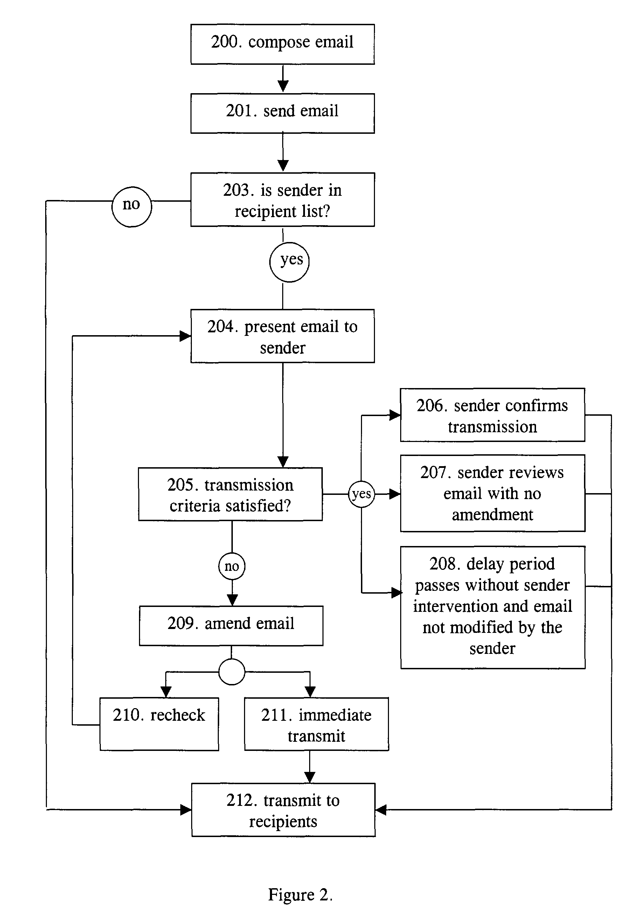

Figure 2 illustrates an alternative embodiment in which the system automatically checks (203) for the existence of the user in the recipient list. The user may be listed in the "cc:" "bcc:" or "to:" fields. If the user is listed in any of these fields, the email is intercepted and transmitted back to the sender (204) where the check for transmission criteria (205) is carried out in a similar manner as in Figure 1. If the sender is not in the recipient list, according to this embodiment, the email may be automatically and immediately transmitted to the recipients. Accordingly, adding the sender to the recipient list is a way of signaling to the system that the email should be checked.

In a preferred embodiment, the checking functionality is integrated into the existing email application as much as possible. This is to avoid the user having to change his or her email habits. Accordingly, it would be preferable that an existing system be modified to be able to distinguish between a pending email and a confirmed email. In one embodiment, the email for checking is presented to the sender by placing it in the senders INBOX. When the sender opens the email for checking, it is opened in a special mode that allows editing and incorporates a "confirm send" or similarly identified option. The email may be identified and distinguished according the following implementations. The system may analyse the "FROM" field, sent date and a mail-check flag. If the "FROM" field equals or includes the users email address and the sent date + timeout period is prior to the current date, then the email is to be checked and is thus, on sending, intercepted presented to the sender. This may be a less preferable approach where aliasing is supported by the SMTP as the senders email address may be changed when the email is relayed. It is considered that a better approach might be to add a TAG to the senders outgoing email. This tag can be interpreted by the email client and as it is configured to correspond to a "present to sender" instruction, it will not affect other email. The tag could be implemented as a user-defined field or extension field in the email header in accordance with RFC-822.

Other implementation embodiments may be viable depending on the particular situation or existing email system. For example, the pending email might be held in a separate INBOX or accessed through a separate dialogue box/menu so that the sender is compelled to check the outgoing email within certain specified time limits.

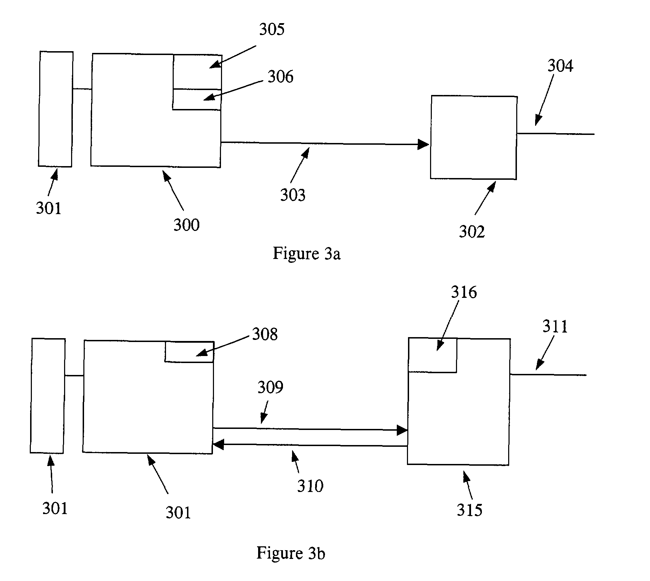

Figure 3a and 3b illustrates highly simplified schematic embodiments of a standalone and client/server architecture showing how the mail checking functionality may be implemented. Referring to Figure 3a, a computer (300) includes an interface (301) such as a keyboard and monitor. The computer also includes at least one microprocessor and memory means. In this embodiment, the email application (305) operates locally and the data corresponding to the email (306) is preferably stored locally. As can be seen, all of the email handling is carried out on the local machine whereby the steps of interception, presentation, checking, editing (where necessary) and finally sending to recipients are all performed on, for example, the senders PC. Once confirmed, the email is sent via a connection (303) such as a LAN, network, dialup, wireless or similar connection. Once checked and confirmed, the email is sent to an email server (302) for spooling and forwarding (304) according to known email handling techniques.

The same mail-checking features illustrated in Figures 1 and 2 could be implemented at the server level. In this implementation, the communication protocol would operate so that the server would not send the email until the checking process has been completed. In one embodiment, the server would intercept the email then present it to the original sender while keeping locally a copy for forwarding to the recipient(s) if no amendments are made. If, for example, a specified delay passes without user intervention once the user has read the email or some other transmission criteria satisfied, the client application would instruct the server to proceed with sending the email to the recipients. However, if the sender, via the client software, signals an abort command, amends the email or initiates a similar failure of the transmission criteria, the server is notified and frees its mail queue without sending the pending email to the recipient(s). This embodiment is shown in highly schematic form in Figure 3b. Here, the client machine includes (as before) a user interface (301) and at least one processor and associated memory. The email may be held resident locally (308) while the user is composing it. Once completed, the email is transmitted (309) to the email server application (316) running on the server (315). The server carries out a similar procedure as discussed above: the email for checking is intercepted, presented to the user (310) and if the transmission criteria are satisfied, the user initiates a triggering event which causes the server to send the email to the desired recipients (311). Although this procedure is not supported by the present SMTP protocol, it is considered that implementing this functionality would be within the scope of one skilled in the art and be an extension or modification in accordance with RFC 821.

Thus it can be seen that the invention provides for an effective way of allowing users to retain more control over their email content. The method may be readily implemented or integrated into existing electronic mail systems and is envisaged to operate with relatively little interference to the user other than requiring them to check their work at the appropriate stage(s). Modifications might include providing the functionality of the invention as an option that may be activated/deactivated by a system administrator or at user level.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A method of operating an electronic mail (email) system including the steps of:
(e) enabling a sender to compose an email and initiate a send operation to one or more recipients in respect of the email;
(f) intercepting the email sent by the sender;
(g) presenting the email to the sender in such a way that the sender can amend the email; and
(h) in response to a specified triggering event dependent on satisfaction of the senders transmission criteria, transmitting the email to the one or more recipients.

2. A method as claimed in claim 1 wherein the triggering event includes a sender input.

3. A method as claimed in claim 1 wherein the triggering event corresponds to a user not aborting the transmission of the email within a specified delay period, whereupon at the end of the delay period, the email is automatically sent to the recipient(s) with no intervention.

4. A method as claimed in claim 1 wherein the triggering event corresponds to the sender opening the email and taking no action, then closing the email, whereupon the email is immediately sent to the recipient(s) with no further intervention.

5. A method as claimed in claim 1 wherein the triggering event corresponds to the sender proactively confirming that the email should be sent, whereupon the email is immediately transmitted to the recipient(s) with no intervention.

6. A method as claimed in claim 3 wherein either the sender specifies the delay period or it may be globally set.

7. A method as claimed in any one of claims 1 to 6 claim wherein the transmission step includes additional intervening steps such as spooling the email or handling the email by mail-servers or any other operations as may be required by the particular email implementation or system architecture.

8. A method as claimed in any one of claims 1 to 7 wherein following step (c) in claim 1, the sender amends the email and initiates a send operation in accordance with either step (b) in claim 1 whereupon the email in again subjected to the transmission criteria, or the email is processed in accordance with step (d) in claim 1 where the email is immediately transmitted to the recipient(s) with no further intervention.

9. A method as claimed in claim 1 including the step of checking whether the sender is listed as a recipient of the email and if the sender is identified as a co-recipient of the email, the email is processed in accordance with step (c) above, otherwise the email is transmitted immediately to the one or more recipients.

10. A computer or network of computers adapted to operate in accordance with the method of any one of claims 1 to 9.

11. Computer readable media adapted to operate a computer or network of computers in accordance with any one of claims 1 to 9.

12. A method of handling electronic mail (email) including the steps of:
intercepting an email composed and sent by a sender to one ore more recipients;
presenting the email to the sender, in editable form, for approval; and following approval, transmitting the email to the one or more recipients.
